# EUROPEAN PATENT SPECIFICATION

(11) **EP 2 713 351 B1**
(45) Date of publication and mention of the grant of the patent: **20.06.2018**
(21) Application number: 13185080.2
(22) Date of filing: 19.09.2013
(51) Int. Cl.: G08C 17/02, G08C 23/04

(54) **ELECTRONIC APPARATUS AND CONTROL METHOD OF THE SAME**
ELEKTRONISCHE VORRICHTUNG UND STEUERUNGSVERFAHREN DAFÜR
APPAREIL ÉLECTRONIQUE ET PROCÉDÉ DE COMMANDE DE CELUI-CI

(30) Priority: 28.09.2012 KR 20120108804
(43) Date of publication of application: 02.04.2014
(73) Proprietor: Samsung Electronics Co., Ltd., Gyeonggi-do 16677 (KR)
(72) Inventor: Kim, Tae-Hong, Busan (KR)
(74) Representative: Walaski, Jan Filip

(56) References cited:
- EP-A2- 2 189 977
- US-A1- 2009 192 801

## Description

The present invention relates to an electronic apparatus and a control method of the same, and more particularly, to an electronic apparatus and a control method of the same which is capable of performing an operation according a voice command.

When a user gives a voice command to a particular electronic apparatus that the user wishes to control in an environment with a plurality of electronic apparatuses that may recognize the user's voice command, the electronic apparatuses to which the voice command is not intended to be received, may unintentionally recognize the voice command, execute the voice command, and perform an unintended operation. For example, during a voice call through a mobile phone, some of calling voices may be input to an adjacent electronic apparatus and misunderstood as a voice command.

Further, some of the broadcasting sound output by a television (TV), may be input to an adjacent electronic apparatus and misunderstood as a voice command and cause the electronic apparatus to perform an unintended operation.

US 2009/0192801 A1 discloses a method of controlling an electronic device with voice commands using a mobile phone. EP 2 189 977 A2 discloses a system for transmitting voice commands to a medical device.

Additional aspects and/or advantages will be set forth in part in the description which follows and, in part, will be apparent from the description, or may be learned by practice of the invention.

Accordingly, one or more exemplary embodiments provide an electronic apparatus and a control method of the same which reduces misunderstanding of, and malfunction to, a voice command of a plurality of electronic apparatuses which may recognize a voice command, and increases a voice recognition rate.

According to an aspect of the present invention, there is provided an electronic apparatus according to claim 1, and a control method of an electronic apparatus according to claim 8.

The foregoing and/or other aspects may be achieved by providing an electronic apparatus including a voice acquirer which receives a first voice, a voice processor which processes a voice signal, a communication unit which communicates with at least one external electronic apparatus and receives information on at least one second voice, and a controller which determines whether the first voice is a user's command based on the information on at least one second voice transmitted by the communication unit, and if the first voice is not the user's command, does not perform an operation according to the first voice.

Also, the communication unit may further include a second communication unit for a voice call, and the controller transmits voice information based on the voice input through the voice acquirer to the at least one external electronic apparatus through the communication unit when a voice call is made through the second communication unit.

Also, the electronic apparatus may further include a display unit which displays an image thereon, and a voice output unit which outputs a voice corresponding to the image, and if the voice is output through the voice output unit corresponding to the image, the controller transmits voice information corresponding to the output voice to the at least one external electronic apparatus through the communication unit.

Also, the controller may determine whether a voice input through the voice acquirer is a user's command granting a right to control the at least one external electronic apparatus, and transmits information to the at least one external electronic apparatus to notify that the controller has obtained the control right to the at least one external electronic apparatus according to a determination result.

Also, the controller may determine whether a voice, which has been input through the voice acquirer after the controller has obtained the control right, is a voice command with respect to one of the at least one external electronic apparatus and transmits the voice command to the at least one external electronic apparatus according to a determination result.

Also, upon receiving information notifying that one of the at least one external electronic apparatus has obtained the control right through the communication unit, the controller may determine that the voice which has been acquired by the voice acquirer is not a user's command.

Also, the communication unit may receive determination result information on at least one second voice from the at least one external electronic apparatus, and the controller determines whether the voice input through the voice acquirer is a user's command, based on the determination information.

Also, the controller may determine whether the first voice is a user's command based on a distance between a user's location and the electronic apparatus and the at least one external electronic apparatus.

Also, the controller may determine whether the first voice is a user's command based on an angle between a user's location and a location of the electronic apparatus.

The foregoing and/or other aspects may be achieved by providing a control method of an electronic apparatus including receiving information on at least one second voice from at least one external electronic apparatus, receiving a first voice, determining whether the first voice is a user's command based on information on the at least one second voice, and not performing an operation according to the first voice if the first voice is not a user's command.

Also, the control method may further include performing communication for a voice call; and transmitting information on a calling voice input during the communication for the voice call to the at least one external electronic apparatus.

Also, the control method may further include processing and displaying an image signal and processing and outputting a voice signal corresponding to the image signal; and transmitting voice information corresponding to the output voice to the at least one external electronic apparatus.

Also, the control method may further include determining whether the voice input to the electronic apparatus is a user's command granting a right to control the at least one external electronic apparatus; and transmitting information notifying that the electronic apparatus has obtained a control right to the at least one external electronic apparatus if the voice has been determined to be the user's command granting the control right.

Also, the control method may further include determining whether a voice input to the electronic apparatus after the information notifying that the electronic apparatus has obtained the control right is a voice command to one of the at least one external electronic apparatus; and transmitting the voice command to a corresponding external electronic apparatus or performing a voice command by the electronic apparatus, according to the determination result.

Also, the control method may further include receiving information notifying that one of the at least one external electronic apparatus has obtained the control right; and not performing an operation according to a voice that is input after the information notifying that the obtained control right is received.

Also, the control method may further include receiving determination result information on at least one second voice from the at least one external electronic apparatus; and determining whether the voice input to the electronic apparatus is a user's command, based on the received at least one determination result information. Also, the determining whether the first voice is the user's command may further include determining whether the first voice is a user's command based on a distance between a user's location and a location of the electronic apparatus and the at least one external electronic apparatus.

Also, the determining whether the first voice is the user's command may include determining whether the first voice is a user's command, based on an angle between a user's location and a location of the electronic apparatus.

The above and/or other aspects will become apparent and more readily appreciated from the following description of exemplary embodiments, taken in conjunction with the accompanying drawings, in which:
FIG. 1 is a block diagram of a plurality of electronic apparatuses which is capable of performing mutual communication according to an embodiment;
FIGS. 2 to 4 are block diagrams of an electronic apparatus according to an embodiment; and
FIGS. 5 to 8 are flowcharts showing a control method of the electronic apparatus in FIGS. 2 to 4.

Below, one or more exemplary embodiments will be described in detail with reference to accompanying drawings so as to be easily realized by a person having ordinary knowledge in the art. One or exemplary embodiments may be embodied in various forms without being limited to one or exemplary embodiments set forth herein.

Descriptions of well-known parts are omitted for clarity, and like reference numerals refer to like elements throughout.

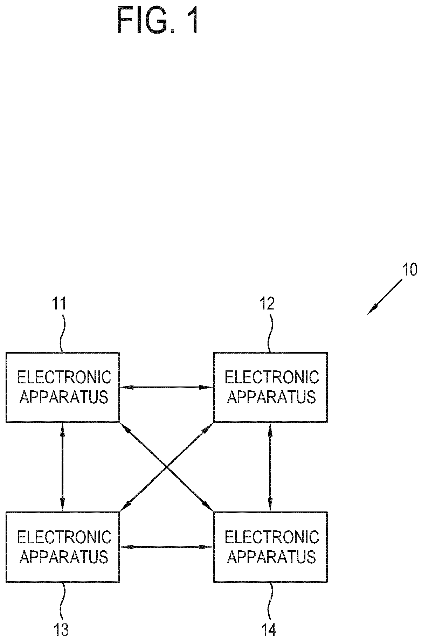

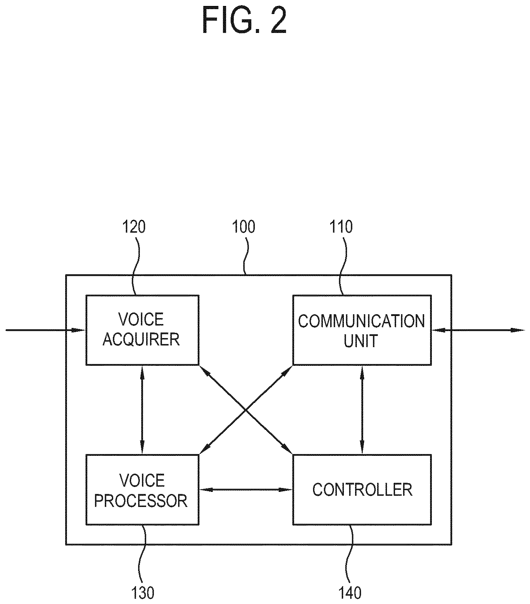

FIG. 1 illustrates an electronic apparatus system including a plurality of electronic apparatuses which is capable of performing mutual communication according to an embodiment. FIG. 2 is a block diagram showing a configuration of the plurality of electronic apparatuses in FIG. 1.

As shown in FIGS. 1 and 2, an electronic apparatus system 10 includes a plurality of electronic apparatuses 11, 12, 13 and 14. The plurality of electronic apparatuses 11, 12, 13 and 14 is connected to one another through various wired and/or wireless networks for mutual communication, and includes a voice recognition engine to perform a user's voice command, respectively. For example, in a wireless connection, the electronic apparatus system 10 may synchronize time of the plurality of electronic apparatuses 11, 12, 13 and 14 through a period beacon signal. In another example, in a wired connection, the electronic apparatus system 10 may synchronize the time by exchanging time information.

As a non-limiting example, the electronic apparatus system 10 in FIG. 1 includes four electronic apparatuses 11, 12, 13 and 14, but the number of the electronic apparatuses included in the electronic apparatus system 10 according to an embodiment is not limited to the foregoing.

Electronic apparatuses 100, 200, 300, 11, 12, 13, and 14 according to an embodiment include home appliances such as a TV, a set-top box, a mobile phone, an air conditioner, a computer, etc. However, any other electronic apparatuses which have a voice recognition capability may be used.

The electronic apparatus 100 includes a communication unit 110, a voice acquirer 120, a voice processor 130 and a controller 140.

The communication unit 110 includes, for example, wired/wireless LAN, infrared (IR) communication, radio frequency (RF), Bluetooth, Zigbee, etc., and exchanges data with an external electronic apparatus. However, the communication unit may use other method of exchanging data with an external electronic apparatus.

The voice acquirer 120 receives a user's voice through an input device such as a microphone. The voice acquirer 120 may receive the user's voice and recognize the received user's voice as a user's voice command, and may perform a corresponding operation according to the user's voice command, or if the received voice is not recognized as a user's voice command, a normal voice calling is performed.

The voice acquirer 120 may further include a voice preprocessing unit (not shown) to filter noises of input voice. Various methods of filtering noises may be used to filter the noise from the input voice.

The voice processor 130 is implemented as voice recognition engine to process a user's voice command from the voice acquirer 120 or voice data transmitted through the communication unit 110. Various methods of recognizing voice may be used to filter the noise from the input voice.

The controller 140 controls the communication unit 110, the voice acquirer 120 and the voice processor 130, and controls the foregoing components to perform operations corresponding to a user's command.

The controller 140 receives information on at least one second voice through the communication unit 110 from an external electronic apparatus. Upon receiving a first voice from the voice acquirer 120, the controller 140 determines whether the first voice is a user's command, based on the information on at least one second voice transmitted through the communication unit 140. If it is determined that the first voice is not a user's command, the controller 140 does not perform an operation according to the first voice.

For example, if an external electronic apparatus is a television (TV) which outputs an image including a broadcasting signal, and a voice such as audio sound corresponding to the image, second voice information corresponding to the output voice may be transmitted by the TV through the communication unit 110. A first voice may be also transmitted by the voice acquirer 120.

The controller 140 determines a degree of similarity between information on the second voice corresponding to audio sound of the TV and the first voice input through the voice acquirer 120. If it is determined that there is a predetermined similarity between the information on the second voice and the first voice, the controller 140 determines that the first voice is not a user's command and does not perform a corresponding operation.

For example, if an audio sound output by a TV as an external electronic apparatus is input through the voice acquirer 120, the controller 140 determines that the audio sound is not a user's command and prevents a malfunction of the electronic apparatus.

The controller 140 determines a degree of similarity between the first voice input through the voice acquirer 120 and information on the second voice transmitted through the communication unit 110. If it is determined that there is no predetermined similarity therebetween, the controller 140 determines that the first voice is a user's command. Accordingly, the controller 140 controls the voice processor 130 to recognize the first voice, and performs the user's command corresponding to the recognized result.

For example, if an external electronic apparatus is a mobile phone which currently performs a voice calling operation, second voice information corresponding to a calling voice input through the mobile phone may be transmitted through the communication unit 110. Also, the first voice may be transmitted by the voice acquirer 120.

The controller 140 determines a degree of similarity between information on the second voice corresponding to the calling voice input to the mobile phone and the first voice input through the voice acquirer 120. If it is determined that there is a predetermined similarity therebetween, the controller 140 determines that the first voice is not a user's command and does not perform the corresponding operation.

For example, if a calling voice output during a voice call through a mobile phone is input through the voice acquirer 120, the controller 140 determines that the voice is not a user's command, and prevents a malfunction of the electronic apparatus 100.

The controller 140 determines a degree of similarity between the first voice input through the voice acquirer 120 and information on the second voice transmitted through the communication unit 110. If it is determined that there is no predetermined similarity therebetween, the controller 140 determines that the first voice is a user's command. Accordingly, the controller 140 controls the voice processor 130 to recognize the first voice, and performs a user's command corresponding to the recognized result.

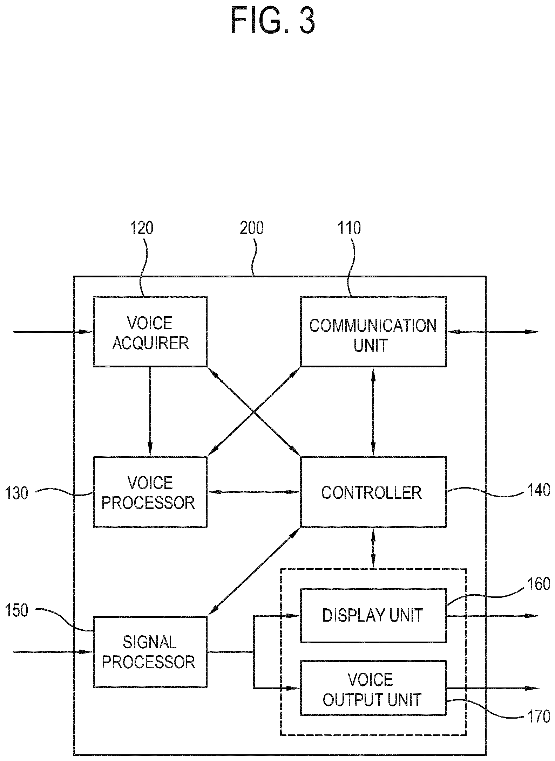

FIG. 3 is a block diagram of a display apparatus 200 as an aspect of the electronic apparatus 100 according to an embodiment.

The display apparatus 200 includes a communication unit 110, a voice acquirer 120, a voice processor 130, a signal processor 150, a display unit 160, a voice output unit 170, and a controller 140 controlling the foregoing components.

The signal processor 150 processes a broadcasting signal transmitted by a transmission apparatus of a broadcasting station or an image/voice signal transmitted by a supply source (not shown) in various forms, according to a preset process. For example, the process of the signal processor 150 may include a de-multiplexing operation to divide a predetermined signal by nature, a decoding operation corresponding to a format of a signal, a scaling operation to adjust an image signal into a preset resolution, etc.

The display unit 160 displays an image thereon based on an image signal output by the signal processor 150, and may be implemented as various displays.

The voice output unit 170 outputs an audio sound based on a voice signal output by the signal processor 150. For example, the voice output unit may be a speaker.

If a voice is output through the voice output unit 170 corresponding to an image displayed by the display unit 160, the controller 140 may control the communication unit 110 to transmit voice information corresponding to the output voice to at least one external electronic apparatus.

The type of the voice information transmitted to the external electronic apparatus corresponding to the output voice includes a waveform level to transmit a waveform of actual voice information or its extraction, a frequency level to analyze a frequency of voice information and transmit the analyzed content, a feature level to extract features and transmit the features to recognize a voice, or a mixed level mixing the foregoing three levels. The foregoing methods may be used to transmit information through a packet.

The packet as a structure of data transmitted and received through the communication interface includes a header field and a data field. The data field may include time information, an output intensity and a voice signal.

For example, if the electronic apparatus 100 receives voice information as second information corresponding to a voice output through the voice output unit 170 from the electronic apparatus 200 and receives a first voice through the voice acquirer 120 of the electronic apparatus 100, the controller 140 determines a degree of similarity between the information of the first and second voices. If there is a predetermined similarity therebetween, the controller 140 may determine that the first voice is not a user's command.

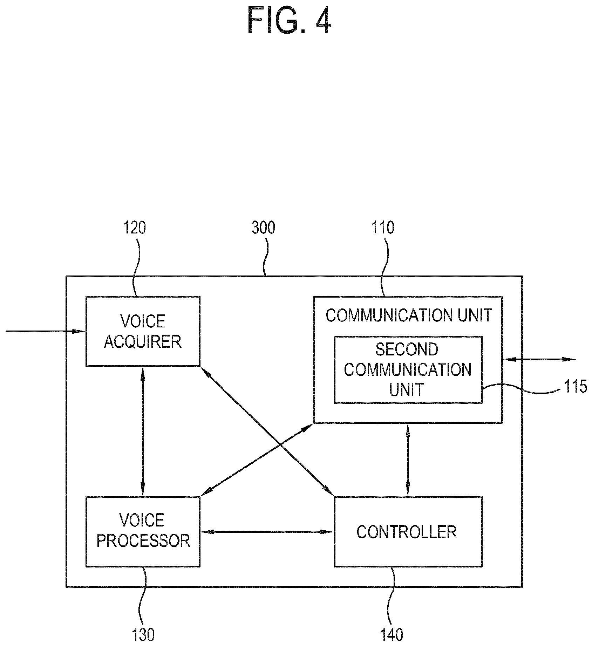

FIG. 4 is a block diagram of a mobile phone 300 as an example of the electronic apparatus 100 according to an embodiment.

The mobile phone 300 includes a communication unit 110, a second communication unit 115 that is included in the communication unit 110, a voice acquirer 120, a voice processor 130, and a controller 140 controlling the foregoing elements.

The second communication unit 115 performs voice communication with an external apparatus (not shown), transmits a calling voice signal input through the voice acquirer 120, and receives a voice signal from the external apparatus. As shown in FIG. 4, the second communication unit 115 according to an embodiment may be included in the communication unit 110 or may be provided separately from the communication unit 110.

When the mobile phone 300 is in a voice call mode, i.e., performs a voice communication through the second communication unit 115, the controller 140 may control the communication unit 110 to transmit voice information to at least one external electronic apparatus based on the calling voice input through the voice acquirer 120.

For example, if the electronic apparatus 100 receives voice information as second voice information from the mobile phone 300 based on the calling voice and receives a first voice through the voice acquirer 120 of the electronic apparatus 100, the controller 140 may determine the degree of similarity between the information of the first and second signals. If it is determined that that is a predetermined similarity therebetween, the controller 140 may determine that the first voice is not a user's command.

The voice acquirer 120 according to an embodiment may receive a user's command granting a right to control the external electronic apparatus. That is, in the electronic apparatus system 10, the electronic apparatus 11 may obtain a control right to remaining electronic apparatuses 12, 13 and 14 according to a user's voice command.

For example, the voice which is input by the voice acquirer 120 may be recognized by the voice processor 130, and the controller 140 may determine that the voice is a command granting a preset control right according to the recognition result.

If the controller 140 determines that the voice is a command granting the right to control the external electronic apparatus, it controls the communication unit 110 to transmit to each external electronic apparatus information notifying that it has obtained the control right to the external electronic apparatus.

If a user's voice is input through the voice acquirer 120, the voice processor 130 recognizes the voice. According to the recognition result of the voice processor 140, the controller 140 determines whether the voice is a voice command with respect to the electronic apparatus 100 or a voice command with respect to the external electronic apparatus.

If it is determined that the voice is a voice command with respect to the electronic apparatus 100, the controller 140 performs an operation corresponding to the voice command. If it is determined that the voice is a voice command with respect to the external electronic apparatus, the controller 140 transmits the voice command to the external electronic apparatus and controls the corresponding external electronic apparatus to perform a voice command.

For example, if an electronic apparatus which has obtained the control right is a mobile phone and a voice such as "TV volume up" is input by the voice acquirer 120, the controller 140 may determine that the voice is a voice command with respect to the external electronic apparatus and transmit the voice command to a TV as the external electronic apparatus.

The communication unit 110 may receive from the external electronic apparatus information notifying that the external electronic apparatus has obtained the control right to the controller 140.

If a voice is input through the voice acquirer 120, the controller 140 determines that the voice is not a user's command and does not perform the corresponding command.

If a user's voice command is transmitted through the communication unit 110 from the external electronic apparatus that has obtained the control right, the controller 140 performs an operation corresponding to the voice command. For example, if a TV receives information notifying that a mobile phone as an external electronic apparatus has obtained a control right to the TV and then receives a voice command such as "volume up" from the mobile phone that has the control right, the controller 140 may increase the output intensity of the voice output by the voice output unit 170, as a corresponding operation.

As one of the plurality of electronic apparatuses is granted the control right to the remaining electronic apparatuses, the electronic apparatus which is not subject to the voice command may be prevented from malfunctioning corresponding to a user's voice command input to the electronic apparatuses.

If a first voice is input by the voice acquirer 120, the controller 140 according to an embodiment may transmit information notifying that the first voice has been input by the voice acquirer 120, to at least one external electronic apparatus.

The communication unit 110 may receive from at least one external electronic apparatus information notifying that the at least one external electronic apparatus has received at least one second voice.

The controller 140 controls the voice processor 130 to recognize the first voice, and makes a predetermined determination on the recognition result. For example, the controller 140 may determine a degree of similarity between the recognition result of the first voice and a voice command in a predetermined pattern which is a basis for the recognition.

The controller 140 controls the communication unit 110 to transmit the determination result of the similarity regarding the first voice to at least one external electronic apparatus.

If the controller 140 receives determination result information on at least one second voice from at least one external electronic apparatus through the communication unit 110, it may determine whether the first voice is a user's command based on the determination result information on at least one second voice.

That is, the controller 140 compares the determination result of the first voice and the determination result information on at least one second voice transmitted through the communication unit 110, and determines whether the first voice is a user's command.

For example, if it is determined that the similarity of patterns of the first voice is about 90% and the determination result of the at least one second voice transmitted by at least one external electronic apparatus is about 80% and 70%, the controller 140 determines that the first voice is a user's command and performs an operation corresponding to the user's command.

Otherwise, if the determination result of the pattern similarity regarding the first voice is 80% and the determination result information on the at least one second voice transmitted by the at least one external electronic apparatus is about 90% and 70%, the controller 140 may determine that the first voice is not a user's command and does not perform the operation corresponding to the first voice.

Accordingly, a malfunction of an unintended electronic apparatus due to an input of the user's voice command may be prevented.

The controller 140 according to an embodiment may determine whether the first voice is a user's command, based on a distance between a location of a user inputting the first voice through the voice acquirer 120 and the electronic apparatus 100 and at least one external electronic apparatus.

If the first voice has been input by the voice acquirer 120, the controller 140 transmits to at least one external electronic apparatus, distance information regarding the first voice, i.e., distance information between a location of a source of the first voice and a location of the voice acquirer 120.

Calculation of the distance from the location where a user speaks, i.e., distance from the location of the voice source may employ various known location calculations.

The communication unit 110 may receive distance information on at least one second voice from at least one external electronic apparatus. The controller may determine the first voice is a user's command based on the received distance information.

For example, the controller 140 compares distance information on the first voice and distance information on at least one second voice. If a distance value of the first voice is the smaller than a predetermined value, the controller 140 determines that the first voice is a user's command and performs an operation corresponding to the first voice. As the distance information on the second voice input through the voice acquirer of the external electronic apparatus is larger than distance information on the received first voice, at least one external electronic apparatus determines that the input second voice is not a user's voice and does not perform an operation corresponding to the second voice.

The electronic apparatus 100 including the controller 140 and at least one external electronic apparatus may be implemented as display apparatuses, respectively.

For example, if a user gives a voice command to one of a plurality of display apparatuses in a place where a plurality of display apparatuses is provided such as a store selling display apparatuses for home use or places demonstrating functions of products, a display apparatus which is closest to the location of a user may perform a corresponding operation to prevent other adjacent display apparatuses from recognizing the voice command and performing the operation.

The controller 140 according to an embodiment may determine whether the first voice is a user's command based on an angle between a location of a user inputting the first voice through the voice acquirer 120 and the electronic apparatus 100 and at least one external electronic apparatus.

If the first voice has been input by the voice acquirer 120, the controller 140 tracks down a location of the source of the first voice, and transmits angle information on the first voice, i.e., information on an angle between the location of the source of the first voice and the location of the voice acquirer 120.

The communication unit 110 may receive angle information on at least one second voice from at least one external electronic apparatus.

The controller 140 compares angle information on the first voice and angle information on at least one second voice. If the angle value of the first voice is the smallest, the controller 140 determines that the first voice is a user's command and performs an operation corresponding to the first voice.

In this case, as the angle information on the second voice input through the voice acquirer of the external electronic apparatus is larger than the angle information on the received first voice, the at least one external electronic apparatus determines that the input second voice is not a user's command and does not perform an operation corresponding to the second voice.

The electronic apparatus including the controller 140 and at least one external electronic apparatus may be implemented as display apparatuses, respectively.

Accordingly, if an identical user's voice is input to voice acquirers of the plurality of adjacent display apparatuses, respectively, the display apparatus facing the location of a user may perform the operation corresponding to the user's voice.

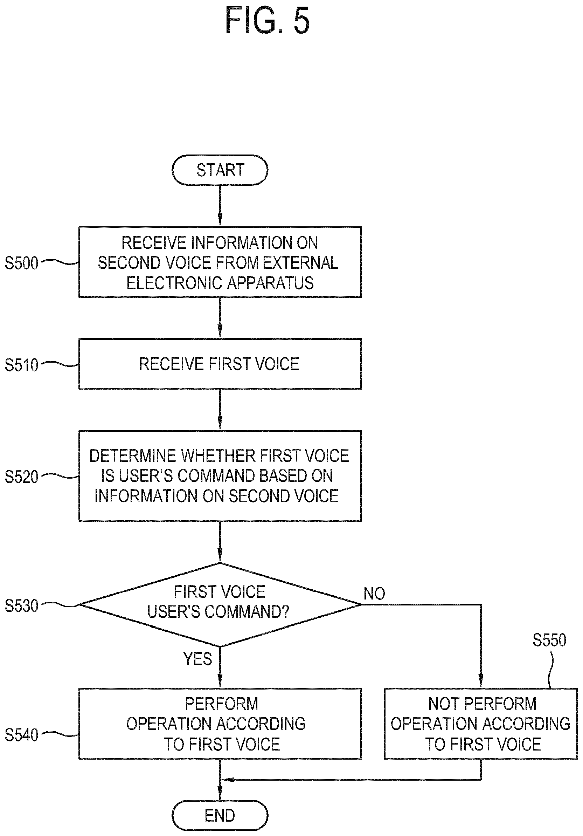

Hereinafter, a control method of the electronic apparatus 100 according to an embodiment will be described with reference to FIGS. 5 to 8.

As shown in FIG. 5, by the control method of the electronic apparatus, information on at least one second voice is transmitted by at least one electronic apparatus (S500). The information on the second voice may include, for example, voice information based on a calling voice of a mobile phone or information on a voice corresponding to the voice output by a voice output unit of a display apparatus or audio apparatus.

The first voice is input by the voice acquirer 120 of the electronic apparatus 100 (S510).

The controller 140 determines whether the first voice is a user's command based on the received information on at least second voice (S520). For example, the controller 140 may determine a degree of similarity between the information on at least one second voice and the first voice. If it determined that the first voice is the user's command, the method proceeds to an operation S540, and if it is determined that the first voice is not the user's command, the method proceeds to an operation S550. (S530). For example, if there is a predetermined similarity, the controller 140 may determine that the first voice is not a user's command and does not perform an operation according to the first voice (S540). If there is no predetermined similarity therebetween, the controller 140 determines that the first voice is a user's command, recognizes the first voice and performs an operation according to the recognized first voice which is the user's command (S550).

If the electronic apparatus 100 performs communication for voice call, the calling voice is transmitted to at least one external electronic apparatus. If the electronic apparatus 100 outputs an audio sound through the voice output unit 170, it transmits voice information corresponding to the output voice to at least one external electronic apparatus.

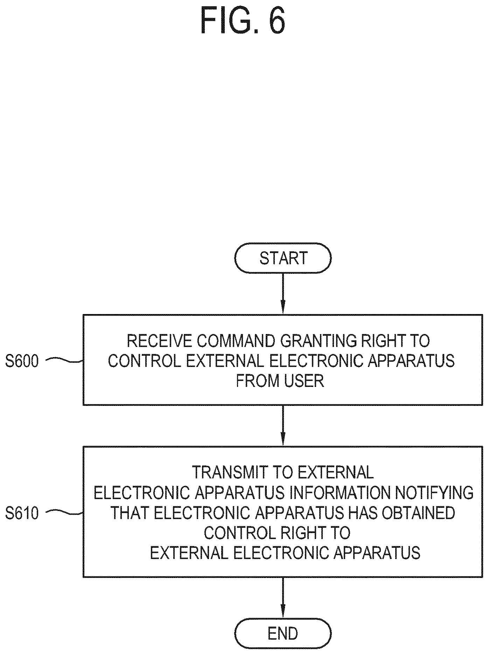

By the control method of the electronic apparatus 100 according to an embodiment, as shown in FIG. 6, the electronic apparatus 100 receives from a user a voice command granting a right to control at least one external electronic apparatus (S600). The electronic apparatus 100 transmits to at least one external electronic apparatus information notifying that the electronic apparatus 100 has obtained the right to control the at least one external electronic apparatus (S610). Upon receiving a voice from a user, the electronic apparatus 100 determines whether the input voice is a voice command with respect to the electronic apparatus 100 or a voice command with respect to at least one external electronic apparatus. If it is determined that the voice is a voice command with respect to the electronic apparatus 100, the operation corresponding to the command is performed. If it is determined that the voice is a voice command with respect to at least one external electronic apparatus, the voice command is transmitted to the corresponding external electronic apparatus. The corresponding external electronic apparatus receives the voice command from the electronic apparatus 100 and performs the operation corresponding to the command.

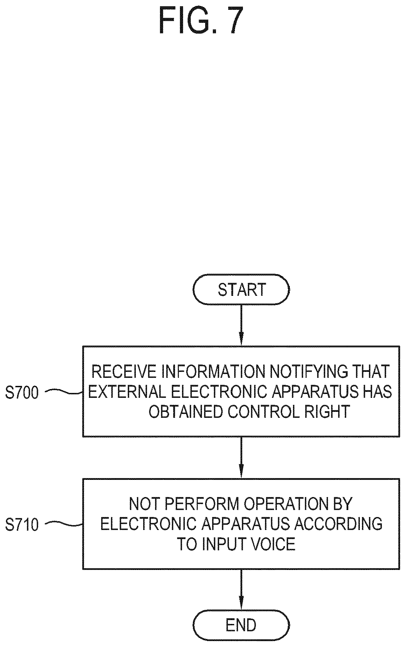

As shown in FIG. 7, the electronic apparatus 100 may receive from one of the at least one external electronic apparatus information notifying that the external electronic apparatus has obtained the right to control the electronic apparatus 100 (S700). The electronic apparatus 100 does not perform an operation corresponding to the voice input through the voice acquirer 120 (S710). The electronic apparatus 100 may receive a voice command from the external electronic apparatus having the control right, and perform the operation according to the voice command.

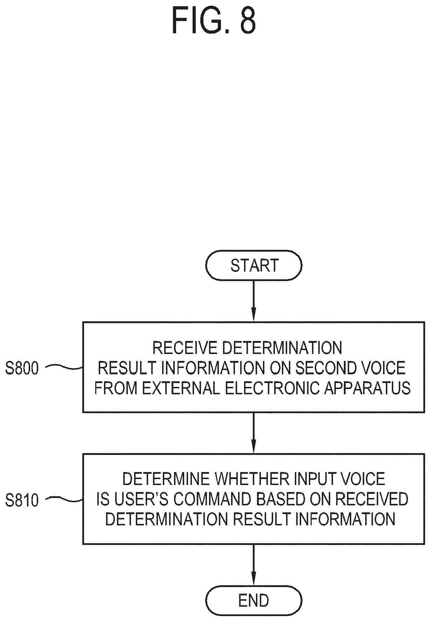

By the control method of the electronic apparatus 100 according to an embodiment, as shown in FIG. 8, the electronic apparatus 100 receives determination result information on at least one second voice from at least one external electronic apparatus (S800). The controller 140 determines whether the voice input by the voice acquirer 120 is a user's command, based on the received determination result information on at least one second voice (S810). That is, the controller 140 may compare the recognition result of the voice input by the voice acquirer 120 and the recognition result of the at least one second voice, and if the first voice is more similar to a predetermined voice command pattern, may determine that the first voice is a user's command.

Although a few exemplary embodiments have been shown and described, it will be appreciated by those skilled in the art that changes may be made in these exemplary embodiments without departing from the principles of the invention, the range of which is defined in the appended claims.

## Claims

1. An electronic apparatus (100, 200, 300) comprising:
a voice acquirer (120) arranged to receive a first voice;
a voice processor (130) arranged to process a voice signal;
a first communication unit (110) arranged to communicate with at least one external electronic apparatus and to receive information on at least one second voice; and
a controller (140) arranged to determine whether the first voice corresponds to a user's command based on the information on at least one second voice, and if the first voice does not correspond to the user's command, arranged not to perform an operation according to the first voice.

2. The electronic apparatus according to claim 1, wherein the first communication unit further comprises a second communication unit (115) arranged to perform communication for a voice call, and the controller is arranged to transmit voice information on a calling voice input through the voice acquirer to the at least one external electronic apparatus through the first communication unit when the voice call is made through the second communication unit.

3. The electronic apparatus according to claim 1 or 2, further comprising:
a display unit (160) arranged to display an image thereon; and
a voice output unit (170) arranged to output a voice signal corresponding to the image signal,
wherein if the voice signal corresponding to the image signal is output through the voice output unit, the controller is arranged to transmit voice information on the output voice signal to the at least one external electronic apparatus through the first communication unit.

4. The electronic apparatus according to one of claims 1 to 3, wherein the controller is arranged to determine whether a fourth voice input through the voice acquirer corresponds to a user's command granting a right to control the at least one external electronic apparatus, and to transmit information to the at least one external electronic apparatus to notify that the controller has obtained the control right to the at least one external electronic apparatus according to a determination result.

5. The electronic apparatus according to claim 4, wherein the controller is arranged to determine whether a fifth voice, which has been input through the voice acquirer after the controller has obtained the control right, corresponds to a voice command with respect to one of the at least one external electronic apparatus and to transmit the voice command to the at least one external electronic apparatus according to a determination result.

6. The electronic apparatus according to claim 5, wherein upon receiving information notifying that one of the at least one external electronic apparatus has obtained the control right through the communication unit, the controller is arranged to determine that the fifth voice which has been acquired by the voice acquirer does not correspond to the user's command.

7. The electronic apparatus according to one of claims 1 to 6, wherein the communication unit is arranged to receive determination result information on at least one second voice from the at least one external electronic apparatus, and the controller is arranged to determine whether the first voice input through the voice acquirer corresponds to the user's command, based on the determination information.

8. A control method of an electronic apparatus comprising:
receiving a first voice;
receiving information on at least one second voice from at least one external electronic apparatus;
determining whether the first voice corresponds to a user's command based on information on the at least one second voice; and
not performing an operation according to the first voice if the first voice does not correspond to the user's command.

9. The control method according to claim 8, further comprising:
performing communication for a voice call; and
transmitting information on a calling voice input during the communication for the voice call to the at least one external electronic apparatus.

10. The control method according to claim 8 or 9, further comprising:
processing and displaying an image signal, and processing and outputting a voice signal corresponding to the image signal; and
transmitting voice information corresponding to the output voice signal to the at least one external electronic apparatus.

11. The control method according to one of claims 8 to 10, further comprising:
determining whether a fourth voice input to the electronic apparatus corresponds to a user's command granting a right to control the at least one external electronic apparatus; and
transmitting information notifying that the electronic apparatus has obtained a control right to the at least one external electronic apparatus if the voice has been determined to be the user's command granting the control right.

12. The control method according to claim 11, further comprising:
determining whether fifth voice input to the electronic apparatus after the information notifying that the electronic apparatus has obtained the control right corresponds to a voice command to one of the at least one external electronic apparatus; and
transmitting the voice command to a corresponding external electronic apparatus or performing a voice command by the electronic apparatus, according to the determination result.

13. The control method according to one of claimi2, further comprising:
receiving information notifying that one of the at least one external electronic apparatus has obtained the control right; and
not performing an operation according to the fifth voice that is input after the information notifying that the obtained control right is received.

14. The control method according to one of claims 8 to 13, further comprising:
receiving determination result information on at least one second voice from the at least one external electronic apparatus; and
determining whether the first voice input to the electronic apparatus is the user's command, based on the received at least one determination result information.

## Patentansprüche

1. Elektronische Vorrichtung (100, 200, 300), die Folgendes beinhaltet:
ein Stimmerfassungsmodul (120), das eingerichtet ist, um eine erste Stimme zu empfangen;
ein Stimmverarbeitungsmodul (130), das eingerichtet ist, um ein Stimmsignal zu verarbeiten;
eine erste Kommunikationseinheit (110), die eingerichtet ist, um mit mindestens einer externen, elektronischen Vorrichtung zu kommunizieren und Information zu mindestens einer zweiten Stimme zu empfangen; und
ein Steuerungsmodul (140), das eingerichtet ist, um basierend auf der Information zu mindestens einer zweiten Stimme zu bestimmen, ob die erste Stimme einem Benutzerbefehl entspricht, und wenn die erste Stimme dem Benutzerbefehl nicht entspricht, eingerichtet ist, einen Vorgang gemäß der ersten Stimme nicht durchzuführen.

2. Elektronische Vorrichtung gemäß Anspruch 1, wobei die erste Kommunikationseinheit ferner eine zweite Kommunikationseinheit (115) beinhaltet, die eingerichtet ist, um Kommunikation für einen Stimmanruf durchzuführen, und das Steuerungsmodul eingerichtet ist, Stimminformation zu einer anrufenden Stimme, die über das Stimmerfassungsmodul eingegeben wird, an die mindestens eine externe, elektronische Vorrichtung über die erste Kommunikationseinheit zu übertragen, wenn der Stimmanruf über die zweite Kommunikationseinheit erfolgt.

3. Elektronische Vorrichtung gemäß Anspruch 1 oder 2, die ferner Folgendes beinhaltet:
eine Anzeigeeinheit (160), die eingerichtet ist, darauf ein Bild anzuzeigen; und
eine Stimmausgabeeinheit (170), die eingerichtet ist, um ein Stimmsignal entsprechend dem Bildsignal auszugeben,
wobei, wenn das Stimmsignal entsprechend dem Bildsignal über die Stimmausgabeeinheit ausgegeben wird, das Steuerungsmodul eingerichtet ist, um Stimminformation zu dem ausgegebenen Stimmsignal an die mindestens eine externe, elektronische Vorrichtung über die erste Kommunikationseinheit zu übertragen.

4. Elektronische Vorrichtung gemäß einem der Ansprüche 1 bis 3, wobei das Steuerungsmodul eingerichtet ist, um zu bestimmen, ob eine vierte Stimme, die über das Stimmerfassungsmodul eingegeben wird, einem Benutzerbefehl entspricht, wodurch eine Berechtigung gewährt wird, um die mindestens eine externe, elektronische Vorrichtung zu steuern, und Information an die mindestens eine externe, elektronische Vorrichtung zu übertragen, um mitzuteilen, dass das Steuerungsmodul die Steuerungsberechtigung bezüglich der mindestens einen externen, elektronischen Vorrichtung gemäß einem Bestimmungsresultat erhalten hat.

5. Elektronische Vorrichtung gemäß Anspruch 4, wobei das Steuerungsmodul eingerichtet ist, um zu bestimmen, ob eine fünfte Stimme, die über das Stimmerfassungsmodul eingegeben wurde, nachdem das Steuerungsmodul die Steuerungsberechtigung erhalten hat, einem Stimmbefehl in Bezug auf eine der mindestens einen externen, elektronischen Vorrichtung entspricht und den Stimmbefehl an die mindestens eine externe, elektronische Vorrichtung gemäß einem Bestimmungsresultat zu übertragen.

6. Elektronische Vorrichtung gemäß Anspruch 5, wobei beim Empfangen der Information, wodurch mitgeteilt wird, dass eine der mindestens einen externen, elektronischen Vorrichtung über die Kommunikationseinheit die Steuerungsberechtigung erhalten hat, das Steuerungsmodul eingerichtet ist, um zu bestimmen, dass die fünfte Stimme, die von dem Stimmerfassungsmodul erfasst wurde, dem Benutzerbefehl nicht entspricht.

7. Elektronische Vorrichtung gemäß einem der Ansprüche 1 bis 6, wobei die Kommunikationseinheit eingerichtet ist, um Bestimmungsresultatinformation zu mindestens einer zweiten Stimme von der mindestens einen externen, elektronischen Vorrichtung zu empfangen, und das Steuerungsmodul eingerichtet ist, um basierend auf der Bestimmungsinformation zu bestimmen, ob die erste Stimme die über das Stimmerfassungsmodul eingegeben wird, dem Benutzerbefehl entspricht.

8. Steuerungsverfahren für eine elektronische Vorrichtung, das Folgendes beinhaltet:
Empfangen einer ersten Stimme;
Empfangen von Information zu mindestens einer zweiten Stimme von mindestens einer externen, elektronischen Vorrichtung;
Bestimmen, basierend auf der Information zu der mindestens einen zweiten Stimme, ob die erste Stimme einem Benutzerbefehl entspricht; und
nicht Durchführen eines Vorgangs gemäß der ersten Stimme, wenn die erste Stimme dem Benutzerbefehl nicht entspricht.

9. Steuerungsverfahren gemäß Anspruch 8, das ferner Folgendes beinhaltet:
Durchführen von Kommunikation für einen Stimmanruf; und
Übertragen von Information zu einer anrufenden Stimmeingabe während der Kommunikation für den Stimmanruf an die mindestens eine externe, elektronische Vorrichtung.

10. Steuerungsverfahren gemäß Anspruch 8 oder 9, das ferner Folgendes beinhaltet:
Verarbeiten und Anzeigen eines Bildsignals und Verarbeiten und Ausgeben eines Stimmsignals entsprechend dem Bildsignal; und
Übertragen von Stimminformation entsprechend dem ausgegebenen Stimmsignal an die mindestens eine externe, elektronische Vorrichtung.

11. Steuerungsverfahren gemäß einem der Ansprüche 8 bis 10, das ferner Folgendes beinhaltet:
Bestimmen, ob eine vierte Stimme, die an die elektronische Vorrichtung eingegeben wird, einem Benutzerbefehl entspricht, wodurch eine Berechtigung gewährt wird, um die mindestens eine externe, elektronische Vorrichtung zu steuern; und
Übertragen der Information, wodurch mitgeteilt wird, dass die elektronische Vorrichtung eine Steuerungsberechtigung bezüglich der mindestens einen externen, elektronischen Vorrichtung erhalten hat, wenn bestimmt wurde, dass die Stimme der Benutzerbefehl ist, wodurch die Steuerungsberechtigung gewährt wird.

12. Steuerungsverfahren gemäß Anspruch 11, das ferner Folgendes beinhaltet:
Bestimmen, ob eine fünfte Stimme, die an die elektronische Vorrichtung eingegeben wird, nach der Information, wodurch mitgeteilt wird, dass die elektronische Vorrichtung die Steuerungsberechtigung erhalten hat, einem Stimmbefehl an eine der mindestens einen externen, elektronischen Vorrichtung entspricht; und
Übertragen des Stimmbefehls an eine entsprechende externe, elektronische Vorrichtung oder Durchführen eines Stimmbefehls durch die elektronische Vorrichtung gemäß dem Bestimmungsresultat.

13. Steuerungsverfahren gemäß Anspruch 12, das ferner Folgendes beinhaltet:
Empfangen von Information, wodurch mitgeteilt wird, dass eine der mindestens einen externen, elektronischen Vorrichtung die Steuerungsberechtigung erhalten hat; und
Nicht Durchführen eines Vorgangs gemäß der fünften Stimme, die nach der Information eingegeben wird, wodurch mitgeteilt wird, dass die erhaltene Steuerungsberechtigung empfangen wurde.

14. Steuerungsverfahren gemäß einem der Ansprüche 8 bis 13, das ferner Folgendes beinhaltet:
Empfangen von Bestimmungsresultatinformation zu mindestens einer zweiten Stimme von der mindestens einen externen, elektronischen Vorrichtung; und
Bestimmen, basierend auf der empfangenen mindestens einen Bestimmungsresultatinformation, ob die erste Stimme, die an die elektronische Vorrichtung eingegeben wird, der Benutzerbefehl ist.

## Revendications

1. Appareil électronique (100, 200, 300) comprenant :
un module d'acquisition de voix (120) agencé pour recevoir une première voix ;
un module de traitement de voix (130) agencé pour traiter un signal vocal ;
un premier module de communication (110) agencé pour communiquer avec au moins un appareil électronique externe et pour recevoir des informations relatives à au moins une deuxième voix ; et
un module de commande (140) agencé pour déterminer si la première voix correspond à une commande utilisateur sur la base des informations relatives à au moins une deuxième voix, et si la première voix ne correspond pas à la commande utilisateur, agencé pour ne pas exécuter une opération en fonction de la première voix.

2. Appareil électronique selon la revendication 1, dans lequel le premier module de communication comprend en outre un second module de communication (115) agencé pour exécuter une communication pour un appel vocal, et le module de commande est agencé pour transmettre des informations de voix relatives à une voix appelante entrée par le biais du module d'acquisition de voix à l'au moins un appareil électronique externe par le biais du premier module de communication lorsque l'appel vocal est effectué par le biais du second module de communication.

3. Appareil électronique selon la revendication 1 ou 2, comprenant en outre :
un module d'affichage (160) agencé pour afficher une image sur celui-ci ; et
un module d'émission de voix (170) agencé pour émettre un signal vocal correspondant au signal d'image ;
dans lequel si le signal vocal correspondant au signal d'image est émis par le biais du module d'émission de voix, le module de commande est agencé pour transmettre des informations de voix relatives au signal vocal émis à l'au moins un appareil électronique externe par le biais du premier module de communication.

4. Appareil électronique selon l'une quelconque des revendications 1 à 3, dans lequel le module de commande est agencé pour déterminer si une quatrième voix entrée par le biais du module d'acquisition de voix correspond à une commande utilisateur accordant un droit de commander l'au moins un appareil électronique externe, et pour transmettre des informations à l'au moins un appareil électronique externe afin de notifier que le module de commande a obtenu un droit de commande à l'au moins un appareil électronique externe selon le résultat d'une détermination.

5. Appareil électronique selon la revendication 4, dans lequel le module de commande est agencé pour déterminer si une cinquième voix, qui a été entrée par le biais du module d'acquisition de voix après que le module de commande a obtenu le droit de commande, correspond à une commande vocale concernant l'un de l'au moins un appareil électronique externe et pour transmettre la commande vocale à l'au moins un appareil électronique externe selon le résultat d'une détermination.

6. Appareil électronique selon la revendication 5, dans lequel à réception d'informations notifiant que l'un de l'au moins un appareil électronique externe a obtenu le droit de commande par le biais du module de communication, le module de commande est agencé pour déterminer si la cinquième voix qui a été acquise par le module d'acquisition de voix ne correspond pas à la commande de l'utilisateur.

7. Appareil électronique selon l'une quelconque des revendications 1 à 6, dans lequel le module de communication est agencé pour recevoir des informations de résultat de détermination relatives à au moins une deuxième voix provenant de l'au moins un appareil électronique externe, et le module de commande est agencé pour déterminer si la première voix entrée par le biais du module d'acquisition de voix correspond à la commande de l'utilisateur, sur la base des informations de détermination.

8. Procédé de commande d'un appareil électronique comprenant :
la réception d'une première voix ;
la réception d'informations sur au moins une deuxième voix provenant d'au moins un appareil électronique externe ;
la détermination si la première voix correspond à une commande utilisateur sur la base d'informations sur l'au moins une deuxième voix ; et
la non-exécution d'une opération en fonction de la première voix si la première voix ne correspond pas à la commande de l'utilisateur.

9. Procédé de commande selon la revendication 8, comprenant en outre :
l'exécution d'une communication pour un appel vocal ; et
la transmission d'informations sur une voix appelante entrée pendant la communication pour l'appel vocal à l'au moins un appareil électronique externe.

10. Procédé de commande selon la revendication 8 ou 9, comprenant en outre :
le traitement et l'affichage d'un signal d'image, et le traitement et l'émission en sortie d'un signal vocal correspondant au signal d'image ; et
la transmission d'informations vocales correspondant au signal vocal émis en sortie à l'au moins un appareil électronique externe.

11. Procédé de commande selon l'une des revendications 8 à 10, comprenant en outre :
la détermination si une quatrième voix entrée dans l'appareil électronique correspond à une commande utilisateur accordant un droit de commande de l'au moins un appareil électronique externe ; et
la transmission d'informations notifiant que l'appareil électronique a obtenu un droit de commande à l'au moins un appareil électronique externe s'il a été déterminé que la voix est la commande utilisateur accordant le droit de commande.

12. Procédé de commande selon la revendication 11, comprenant en outre :
la détermination si une cinquième voix entrée dans l'appareil électronique après les informations notifiant que l'appareil électronique a obtenu le droit de commande correspond à une commande vocale vers l'un de l'au moins un appareil électronique externe ; et
la transmission de la commande vocale à un appareil électronique externe correspondant ou l'exécution d'une commande vocale par l'appareil électronique, en fonction du résultat de détermination.

13. Procédé de commande selon la revendication 12, comprenant en outre :
la réception d'informations notifiant que l'un de l'au moins un appareil électronique externe a obtenu le droit de commande ; et
la non-exécution d'une opération en fonction de la cinquième voix qui est entrée après les informations notifiant que le droit de commande obtenu est reçu.

14. Procédé de commande selon l'une des revendications 8 à 13, comprenant en outre :
la réception d'informations de résultat de détermination relatives à au moins une deuxième voix provenant de l'au moins un appareil électronique externe ; et
la détermination si la première voix entrée dans l'appareil électronique est la commande utilisateur, sur la base de l'au moins une information de résultat de détermination reçue.
